(19) Europäisches Patentamt
European Patent Office
Office européen des brevets

(11) EP 4 678 699 A1

(12) # EUROPEAN PATENT APPLICATION
published in accordance with Art. 153(4) EPC

(43) Date of publication:
**14.01.2026 Bulletin 2026/03**

(21) Application number: **24766928.6**

(22) Date of filing: **26.02.2024**

(51) International Patent Classification (IPC):
***C08L 101/00*** *(2006.01)* ***C07F 9/09*** *(2006.01)*
***C08K 5/521*** *(2006.01)*

(52) Cooperative Patent Classification (CPC):
**C07F 9/09; C08K 5/521; C08L 101/00**

(86) International application number:
**PCT/JP2024/006823**

(87) International publication number:
**WO 2024/185557 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 JP 2023036586**

(71) Applicant: **ADEKA CORPORATION**
**Arakawa-ku**
**Tokyo**
**116-8554 (JP)**

(72) Inventors:
- **KIKUCHI, Yuki**
  **Tokyo 116-8554 (JP)**
- **UMEKI, Tsutomu**
  **Tokyo 116-8554 (JP)**
- **NAKAMURA, Tatsuhito**
  **Tokyo 116-8554 (JP)**

(74) Representative: **Forstmeyer, Dietmar et al**
**Boeters & Lieck**
**Oberanger 32**
**80331 München (DE)**

(54) **RESIN ADDITIVE, COMPOSITION, MOLDED ARTICLE AND COMPOUND**

(57) An object of the present invention is to provide an additive for resin that has excellent thermal resistance and excellent resin stabilization performance. The present invention relates to an additive for resin containing a compound represented by the general formula (1) below. In the general formula (1), $R^1$ represents an alkyl group having 26 to 40 carbon atoms, an alkenyl group having 26 to 40 carbon atoms, or a group represented by the general formula (2) below, where n represents an integer of 1 or 2. When n is 2, the groups $R^1$ may be the same or different. In the general formula (2), $R^2$ represents hydrogen or an alkyl group having 1 to 18 carbon atoms, m represents an integer that results in a number-average molecular weight of 100 to 10,000 for the group represented by the general formula (2), and * represents a bond.

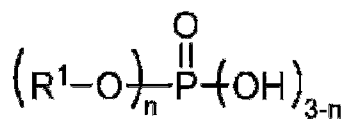

(1)

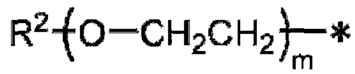

(2)

EP 4 678 699 A1

Processed by Luminess, 75001 PARIS (FR)

## Description

### Technical field

The present invention relates to an additive for resin containing a compound with a specific structure, a composition containing the additive for resin, a shaped article obtained therefrom, and a compound.

### Background Art

Polyester and polycarbonate resins, as well as blends thereof, are used in a wide range of applications, such as electrical and electronic components, automobile components, fibers, and films, due to their excellent mechanical strength and ease of shaping. On the other hand, polyester and polycarbonate resins may cause adverse effects, such as discoloration, a decrease in crystallization temperature, and a decrease in mechanical strength, during processing or over time. To suppress such adverse effects, methods for stabilizing resin by adding a phosphate ester compound have been proposed.

Patent Literature 1 proposes a method for producing a polylactic acid-based resin and states that thermal degradation can be suppressed by adding a catalyst deactivator during the production process. Phosphorus-based compounds, such as phosphate-based compounds and phosphite-based compounds, are described as preferred catalyst deactivators in this invention. In the Examples section, it is stated that adding dioctadecyl phosphate to a polylactic acid resin improves the thermal stability of the resin.

Patent Literature 2 proposes a thermoplastic elastomer composition containing a thermoplastic polyester elastomer, a transesterification catalyst deactivator, and an antioxidant. It is disclosed that an acidic phosphate ester compound is preferred as the transesterification catalyst deactivator in this invention. In the Examples section, it is stated that adding an acidic phosphate ester compound, such as dioctadecyl acid phosphate, and an antioxidant to a polyester elastomer improves mechanical strength and thermal aging resistance.

### Citation List

### Patent Literature

Patent Literature 1: JP 2009-144132A
Patent Literature 2: JP 2020-033462A

### Summary of Invention

In the Examples sections of Patent Literature 1 and Patent Literature 2, it is stated that the addition of acidic phosphate esters, such as octadecyl acid phosphate, has suppressed deterioration of resins. However, as a result of research conducted by the inventors of the present invention, it was found that these acidic phosphate esters have insufficient thermal resistance and cause problems, such as fuming, for example, during processing of the resins.

An object of the present invention is to provide an additive for resin that has excellent thermal resistance and excellent resin stabilization performance.

As a result of further research, the inventors of the present invention found that an additive for resin containing a compound with a specific structure has excellent thermal resistance and excellent resin stabilization performance, thus achieving the present invention.

The present invention provides an additive for resin containing a compound represented by the general formula (1) below.

[Chem. 1]

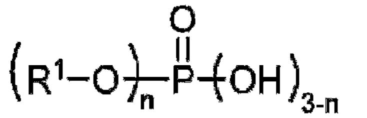

(1)

in the general formula (1), $R^1$ represents an alkyl group having 26 to 40 carbon atoms, an alkenyl group having 26 to 40

carbon atoms, or a group represented by the general formula (2) below, and
n represents an integer of 1 or 2, and when n is 2, the groups $R^1$ may be the same or different.

[Chem. 2]

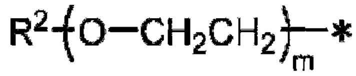 (2)

in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

It is preferable that, in the additive for resin of the present invention, $R^1$ in the general formula (1) represents an alkyl group having 28 to 36 carbon atoms.

It is preferable that, in the additive for resin of the present invention, $R^1$ in the general formula (1) represents a group represented by the general formula (2).

It is preferable that, in the additive for resin of the present invention, $R^2$ in the general formula (2) represents an alkyl group having 1 to 4 carbon atoms.

It is preferable that, in the additive for resin of the present invention, m in the general formula (2) represents an integer that results in a number-average molecular weight of 400 to 5,000 for the group represented by the general formula (2).

It is preferable that the additive for resin of the present invention contains: an acidic phosphate monoester where n in the general formula (1) is 1; and an acidic phosphate diester where n in the general formula (1) is 2.

It is preferable that, in the additive for resin of the present invention, a content ratio between the acidic phosphate monoester and the acidic phosphate diester is within a range of 100:1 to 100:10,000 in terms of mass ratio (acidic phosphate monoester:acidic phosphate diester).

The present invention also provides a composition containing a thermoplastic resin and the additive for resin.

It is preferable that, in the composition of the present invention, the thermoplastic resin is one or more selected from polyester resins and polycarbonate resins.

The present invention also provides a shaped article obtained from the composition.

The present invention also provides a compound represented by the general formula (1) below.

[Chem. 3]

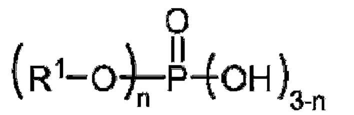 (1)

in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different.

[Chem. 4]

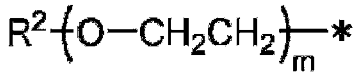 (2)

in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

According to the present invention, it is possible to provide an additive for resin that has excellent thermal resistance and excellent resin stabilization performance, a composition containing the additive for resin, and a shaped

article obtained from the composition.

Description of Embodiments

Hereinafter, embodiments of the present invention will be described in detail.

Additive for Resin

An additive for resin of the present invention contains a compound represented by the general formula (1) below.

[Chem. 5]

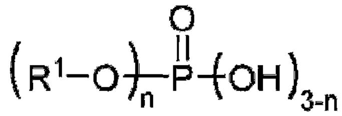 (1)

in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different.

[Chem. 6]

$$R^2\left(O-CH_2CH_2\right)_m-* \qquad (2)$$

in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

The additive for resin of the present invention achieves the effect of having excellent thermal resistance and excellent resin stabilization performance. The reason for this effect is not clear, but is surmised as follows.

Thermoplastic resins usually contain catalyst residue. This catalyst residue causes a decrease in molecular weight due to hydrolysis and hybridization of molecular bonds due to transesterification reactions, resulting in problems such as changes in melt flowability, discoloration, and a decrease in mechanical strength. By containing a compound with the above-described structure, the additive for resin of the present invention functions as a catalyst deactivator and can eliminate problems caused by catalyst residue. Thus, a resin stabilization effect can be achieved. In addition, with the above-described structure, the compound has excellent thermal resistance in itself, reduces degradation of thermoplastic composition resin during processing, and enables the additive for resin to stably perform its functions. For the foregoing reason, the additive for resin achieves the effect of having excellent thermal resistance and excellent resin stabilization performance.

Examples of the alkyl group having 26 to 40 carbon atoms represented by $R^1$ in the general formula (1) above include linear or branched alkyl groups such as a hexacosyl group, an octacosyl group, a triacontyl group, a dotriacontyl group, a hexatriacontyl group, a tetracontyl group, a 2-decylhexadecyl group, a 2-dodecylhexadecyl group, a 2-decyloctadecyl group, a 2-tetradecyloctadecyl group, a 2-hexadecyloctadecyl group, a 2-tetradecyleicosyl group, and a 2-hexadecyleicosyl group.

Examples of the alkenyl group having 26 to 40 carbon atoms represented by $R^1$ in the general formula (1) above include linear or branched alkenyl groups such as a hexacosenyl group, an octacosenyl group, a triacontenyl group, a dotriacontenyl group, a hexatriacontenyl group, a tetracontenyl group, a 2-dodecyl hexadecenyl group, and a 2-dodecyl octadecenyl group. The position of the double bond may be at the $\alpha$-position, an internal position, or the $\omega$- position.

$R^1$ in the general formula (1) is preferably an alkyl group having 26 to 40 carbon atoms or a group represented by the general formula (2), and more preferably a group represented by the general formula (2). With this configuration, more excellent thermal resistance can be achieved.

When $R^1$ in the general formula (1) represents an alkyl group having 26 to 40 carbon atoms, the alkyl group is preferably an alkyl group having 28 to 36 carbon atoms, more preferably an alkyl group having 30 to 34 carbon atoms, and particularly preferably an alkyl group having 31 to 33 carbon atoms. With this configuration, an additive for resin of the

present invention that has further improved thermal resistance and resin stabilization performance can be obtained.

Examples of the alkyl group having 1 to 18 carbon atoms represented by $R^2$ in the general formula (2) include linear or branched alkyl groups such as a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, an isohexyl group, a tert-hexyl group, a heptyl group, an isoheptyl group, a tert-heptyl group, an octyl group, an isooctyl group, a tert-octyl group, a 2-ethylhexyl group, a nonyl group, an isononyl group, a decyl group, an isodecyl group, a 2-propylheptyl group, an undecyl group, an isoundecyl group, a dodecyl group, an isododecyl group, a tridecyl group, an isotridecyl group, a tetradecyl group, a hexadecyl group, and an octadecyl group.

$R^2$ in the general formula (2) is preferably an alkyl group having 1 to 8 carbon atoms, more preferably an alkyl group having 1 to 4 carbon atoms, even more preferably a methyl group or an ethyl group, and particularly preferably a methyl group. With this configuration, an additive for resin of the present invention that has further improved thermal resistance and resin stabilization performance can be obtained.

In the general formula (2), m represents an integer that results in a number-average molecular weight of 100 or greater for the group represented by the general formula (2), preferably an integer that results in a number-average molecular weight of 400 or greater for the group represented by the general formula (2), more preferably an integer that results in a number-average molecular weight of 800 or greater for the group represented by the general formula (2), even more preferably an integer that results in a number-average molecular weight of 1,000 or greater for the group represented by the general formula (2), and particularly preferably an integer that results in a number-average molecular weight of 1,500 or greater for the group represented by the general formula (2). With this configuration, an additive for resin of the present invention that achieves a better balance between thermal resistance and resin stabilization performance can be obtained.

Furthermore, m in the general formula (2) above represents an integer that results in a number-average molecular weight of 10,000 or less for the group represented by the general formula (2), preferably an integer that results in a number-average molecular weight of 5,000 or less for the group represented by the general formula (2), more preferably an integer that results in a number-average molecular weight of 4,500 or less for the group represented by the general formula (2), even more preferably an integer that results in a number-average molecular weight of 3,500 or less for the group represented by the general formula (2), and particularly preferably an integer that results in a number-average molecular weight of 2,500 or less for the group represented by the general formula (2). With this configuration, an additive for resin according to the present invention that has further improved thermal resistance and resin stabilization performance can be obtained.

The number-average molecular weight (Mn) of the group represented by the general formula (2) can be measured using the following method.

Method for Measuring Number-Average Molecular Weight of Group Represented by General Formula (2)

A chromatogram is obtained by performing gel permeation chromatography (GPC) measurement on the compound represented by the general formula (1). With respect to a peak derived from an acidic phosphate monoester in the chromatogram, the number-average molecular weight ($Mn_1$) of the acidic phosphate monoester is calculated using a calibration curve created based on a polystyrene standard. The number-average molecular weight (Mn) of the group represented by the general formula (2) is calculated from the obtained $Mn_1$ in accordance with the following equation (i):

$$\mathrm{Mn} = \mathrm{Mn}_1 - 80 \qquad (\mathrm{i}).$$

The additive for resin of the present invention may contain an acidic phosphate monoester where n in the general formula (1) is 1 or an acidic phosphate diester where n in the general formula (1) is 2, but preferably contains both an acidic phosphate monoester and an acidic phosphate diester in view of thermal resistance and resin stabilization performance. In this case, the content ratio between the acidic phosphate monoester and the acidic phosphate diester is preferably 100:1 to 100:10,000, more preferably 100:3 to 100:500, and even more preferably 100:5 to 100:100, in terms of mass ratio (acidic phosphate monoester:acidic phosphate diester). With this configuration, an additive for resin according to the present invention that has further improved thermal resistance and resin stabilization performance can be obtained.

Note that the mass ratio between the acidic phosphate monoester and the acidic phosphate diester can be measured through analysis using a nuclear magnetic resonance spectrometer (NMR).

When n in the general formula (1) is 2, the two groups $R^1$ may be the same or different, but are preferably the same. With this configuration, an additive for resin according to the present invention that has further improved thermal resistance and resin stabilization performance can be obtained.

Conventionally known methods can be used to produce a compound represented by the general formula (1), and an example is a method in which an alcohol corresponding to $R^1$ in the general formula (1) is reacted with diphosphorus pentoxide.

More specific examples of the additive for resin of the present invention are compounds represented by the formulae (3) and (4) below. A compound represented by the formula (3) below can be produced by reacting methoxypolyethylene glycol (polyethylene glycol monomethyl ether) having a predetermined molecular weight with diphosphorus pentoxide. A compound represented by the formula (4) below can be produced by reacting 2-tetradecyloctadecanol with diphosphorus pentoxide. However, the present invention is not limited to the following compounds.

[Chem. 7]

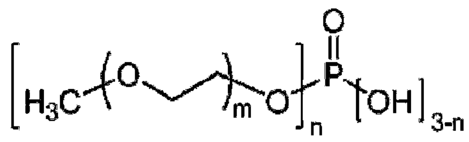
(3)

[Chem. 8]

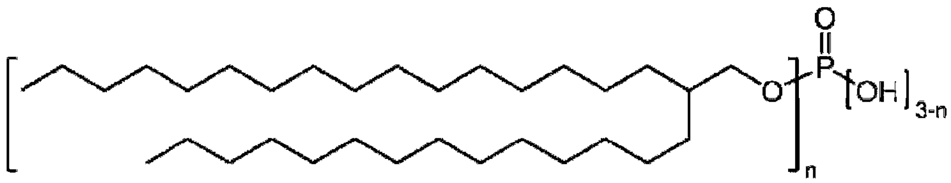
(4)

In the formulae (3) and (4), n represents an integer of 1 or 2. In the formula (3), m represents an integer that results in a number-average molecular weight of 100 to 10,000 for the structural moiety in the brackets.

The additive for resin of the present invention preferably contains one or more compounds selected from the group consisting of compounds represented by the formulae (3) and (4) above. Of these, it is more preferable that the additive for resin of the present invention contains one or more compounds selected from the group consisting of compounds represented by the formula (3) above, and it is even more preferable that m in the formula (3) above represents an integer that results in a number-average molecular weight of 400 to 5,000 for the structural part in the brackets. With this configuration, an additive for resin of the present invention that has further improved thermal resistance and resin stabilization performance can be obtained.

The additive for resin of the present invention may be a single compound or a mixture of two or more compounds.

Composition

A composition of the present invention contains the above-described additive for resin and a thermoplastic resin.

The lower limit of the content of the additive for resin is preferably 0.01 parts by mass, more preferably 0.02 parts by mass, even more preferably 0.05 parts by mass, and particularly preferably 0.1 parts by mass, relative to 100 parts by mass of the composition of the present invention. On the other hand, the upper limit of the content of the additive for resin is preferably 10 parts by mass, more preferably 7 parts by mass, even more preferably 5 parts by mass, and particularly preferably 3 parts by mass, relative to 100 parts by mass of the composition of the present invention. With this configuration, the composition of the present invention can more effectively exhibit the effect of having excellent thermal resistance and stability performance.

In addition, the lower limit of the content of the additive for resin is preferably 0.01 parts by mass, more preferably 0.02 parts by mass, even more preferably 0.05 parts by mass, and particularly preferably 0.1 parts by mass, relative to 100 parts by mass of the thermoplastic resin. On the other hand, the upper limit of the content of the additive for resin is preferably 10 parts by mass, more preferably 7 parts by mass, even more preferably 5 parts by mass, and particularly preferably 3 parts by mass, relative to 100 parts by mass of the composition of the present invention. With this configuration, the composition of the present invention can more effectively exhibit the effect of having excellent thermal resistance and stability performance.

Examples of the above-described thermoplastic resin include synthetic resins such as polyolefin resins, styrene-based resins, polyester resins, polycarbonate resins, polysulfide resins, polyamide resins, polyether resins, and halogen-containing resins. One of these resins may be used alone, or two or more thereof may be used in combination.

Further examples of the above-described thermoplastic resin include thermoplastic resins such as petroleum resins, coumarone resins, polyvinyl acetate, acrylic resins, polymethylmethacrylate, polyvinyl alcohol, polyvinyl formal, polyvinyl butyral, polyurethane, cellulose-based resins, polyimide resins, polysulfones, and liquid crystal polymers, as well as blends of these resins.

Additional examples of the above-described thermoplastic resin may be thermoplastic elastomers such as isoprene rubber, butadiene rubber, ethylene-propylene rubber, ethylene-propylene-diene rubber, acrylonitrile-butadiene copolymer rubber, styrene-butadiene copolymer rubber, olefin-based elastomers, styrene-based elastomers, polyester-based elastomers, nitrile-based elastomers, vinyl chloride-based elastomers, polyamide-based elastomers, and polyurethane-based elastomers. These resins may be used in combination with the above-listed synthetic resins and the like.

Examples of the polyolefin resins mentioned above include polypropylene, high-density polyethylene, low-density polyethylene, linear low-density polyethylene, polybutene-1, poly(3-methylpentene), poly(4-methylpentene), and $\alpha$-olefin copolymers such as ethylene/propylene block and random copolymers.

Examples of the styrene-based resins mentioned above include syndiotactic polystyrene and acrylonitrile-butadiene-styrene terpolymers.

Examples of the polysulfide resins mentioned above include polyphenylene sulfide.

Examples of the polyamide resins mentioned above include polyhexamethylene adipamide.

Among these thermoplastic resins, polyester resins and polycarbonate resins are preferable because the additive for resin of the present invention can more effectively exhibit its resin stabilization performance for these resins. It is also preferable to use a thermoplastic elastomer in combination with these resins.

Examples of the polyester resins mentioned above include polyalkylene terephthalates such as polyethylene terephthalate, polybutylene terephthalate, polytetramethylene terephthalate, and polycyclohexanedimethylene terephthalate; polyalkylene naphthalates such as polyethylene naphthalate and polybutylene naphthalate; degradable aliphatic polyesters such as polyhydroxybutyrate, polycaprolactone, polybutylene succinate, polyethylene succinate, polylactic acid, polymalic acid, polyglycolic acid, polydioxane, and poly(2-oxetanone); and the like.

The polycarbonate resins mentioned above are resins that contain a carbonate bond, and are obtained through a polymerization reaction of, for example, a divalent hydroxyaromatic compound and a carbonate precursor.

Examples of the divalent hydroxyaromatic compound include dihydroxybenzenes such as resorcin and hydroquinone; bishydroxyaryls such as 4,4'-dihydroxydiphenyl; bis(hydroxyaryl)alkanes such as bis(4-hydroxyphenyl) methane, 1,1-bis(4-hydroxyphenyl)ethane, 1,2-bis(4-hydroxyphenoxy)ethane, and 2,2-bis(4-hydroxyphenyl)propane; dihydroxyaryl ketones such as bis(4-hydroxyphenyl)ketone and bis(4-hydroxy-3-methylphenyl)ketone; dihydroxyaryl ethers such as 4,4'-dihydroxydiphenyl ether, 4,4'-dihydroxy-3,3'-dimethylphenyl ether, and 4,4'-dihydroxy-2,5-dihydroxydiphenyl ether; dihydroxyaryl sulfur compounds such as 4,4'-thiodiphenol, bis(4-hydroxyphenyl)sulfide, 4,4'-dihydroxy-3,3'-dimethyldiphenyl sulfide, 4,4'-dihydroxy-3,3'-dimethyldiphenyl sulfoxide, 4,4'-dihydroxy-3,3'-dimethyldiphenyl sulfoxide, 2,2-bis(4-hydroxyphenyl)sulfone, 4,4'-dihydroxydiphenyl sulfone, and 4,4'-dihydroxy-3,3'-dimethyldiphenyl sulfone; phenolphthalein; and the like. One of these compounds may be used alone, or two or more thereof may be used as a mixture. Furthermore, these compounds may be mixed with a polyhydric hydroxyaromatic compound that contains three or more hydroxy groups and used as a mixture.

Suitable specific examples of the carbonate precursor include phosgene, carbonic acid diesters, diphenyl carbonate, dihaloformate of dihydric phenol, and mixtures thereof.

Any of these thermoplastic resins can be used without limitations on the molecular weight, the degree of polymerization, the polymerization method, the density, the softening point, the proportion of insoluble substances in solvents, the degree of stereoregularity, the presence or absence of catalyst residue, the type and blending ratio of starting monomer, the type of polymerization catalyst, and the like.

One of these thermoplastic resins may be used alone, or two or more thereof may be used in combination. Also, the thermoplastic resin may be alloyed.

The lower limit of the content of the thermoplastic resin is preferably 90 parts by mass, more preferably 93 parts by mass, even more preferably 95 parts by mass, and particularly preferably 97 parts by mass, relative to 100 parts by mass of the composition of the present invention. On the other hand, the upper limit of the content of the thermoplastic resin is preferably 99.99 parts by mass, more preferably 99.98 parts by mass, even more preferably 99.95 parts by mass, and particularly preferably 99.9 parts by mass, relative to 100 parts by mass of the composition of the present invention. With this configuration, the composition of the present invention can more effectively exhibit the effect of having excellent thermal resistance and stability performance.

An additional optional component may be blended into the composition of the present invention along with the additive for resin.

There is no particular limitation on the timing of mixing the additive for resin and the additional optional component with the thermoplastic resin. For example, two or more components selected from blending components other than the thermoplastic resin may be mixed in advance and then added to the thermoplastic resin, or components other than the thermoplastic resin may be sequentially added to the thermoplastic resin. When mixing a plurality of components in advance, the components may be individually pulverized before mixing or may be mixed before pulverization. When the thermoplastic resin is an alloy, components other than the thermoplastic resin may be added to an alloyed compound, or may be added during the alloying process.

As a method for mixing the additive for resin and the thermoplastic resin, although a method in which the additive

for resin is mixed with the total amount of the thermoplastic resin to be mixed may be used, a method in which the additive for resin is mixed with a portion of the thermoplastic resin in advance to form a master batch, and then the master batch is mixed with the remaining thermoplastic resin may also be used. The master batch may contain the above-described additional optional component. The content of the additive for resin in the master batch may be 1 part by mass or more in 100 parts by mass of the master batch, and may be 10 parts by mass or more and 90 parts by mass or less.

Hereinafter, additional optional components that can be blended into the composition of the present invention will be described.

A stabilizer, such as a phenolic antioxidant, a phosphorus-based antioxidant, a thioether-based antioxidant, an ultraviolet absorber, or a hindered amine-based light stabilizer, is preferably added to the composition of the present invention to stabilize the composition, when necessary.

Examples of the phenolic antioxidant include: 2,6-di-tert-butyl p-cresol, 2,6-diphenyl-4-octadecyloxyphenol, distearyl(3,5-di-tert-butyl-4-hydroxybenzyl)phosphonate, 1,6-hexamethylenebis[(3,5-di-tert-butyl-4-hydroxyphenyl)propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3-(3,5-di-tert-butyl-4-hydroxyphenyl)methyl propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4 ,8,10-tetraoxaspiro[5,5]undecane, triethylene glycol bis[(3-tert-butyl-4-hydroxy-5-methylphenyl)propionate], and the like. One of these phenolic antioxidants may be used alone, or two or more thereof may be used in combination. In view of the antioxidant effect, the phenolic antioxidant content is preferably 0.001 to 10 parts by mass, and more preferably 0.05 to 5 parts by mass, relative to 100 parts by mass of the thermoplastic resin.

Examples of the phosphorus-based antioxidant include: trisnonylphenyl phosphite, tris(2,4-di-tert-butylphenyl) phosphite, tris[2-tert-butyl-4-(3-tert-butyl-4-hydroxy-5-methylphenylthio)-5-methylphenyl]phosphit e, tridecyl phosphite, octyldiphenyl phosphite, didecylmonophenyl phosphite, bis(tridecyl)pentaerythritol diphosphite, bis(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetrakis(tridecyl)isopropylidenediphenol diphosphite, tetrakis(tridecyl)-4,4'-n-butylidenebis(2-tert-butyl-5-methylphenol)diphosphite, hexakis(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)ami ne, phosphites of 2-ethyl-2-butyl propylene glycol and 2,4,6-tri-tert-butylphenol, and the like. One of these phosphorus-based antioxidants may be used alone, or two or more thereof may be used in combination. In view of the antioxidant effect, the phosphorus-based antioxidant content is preferably 0.001 to 10 parts by mass, and more preferably 0.05 to 5 parts by mass, relative to 100 parts by mass of the thermoplastic resin.

Examples of the thioether-based antioxidant include: dialkyl thiodipropionates such as dilauryl thiodipropionate, dimyristyl thiodipropionate, and distearyl thiodipropionate; pentaerythritol tetrakis(β-alkylmercapto propionates; and the like. One of these thioether-based antioxidants may be used alone, or two or more thereof may be used in combination. In view of the antioxidant effect, the thioether-based antioxidant content is preferably 0.001 to 10 parts by mass, and more preferably 0.05 to 5 parts by mass, relative to 100 parts by mass of the thermoplastic resin.

Examples of the ultraviolet absorber include: 2-hydroxybenzophenones such as 2,4-dihydroxy benzophenone, 2-hydroxy-4-methoxy benzophenone, 2-hydroxy-4-octoxy benzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates such as phenyl salicyllate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxy oxanilide and 2-ethoxy-4'-dodecyl oxanilide; cyanoacrylates such as ethyl-α-cyano-β,β-diphenyl acrylate and methyl-2-cyano-3-methyl-3-(p-methoxyphenyl)acrylate; triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine; and the like. One of these ultraviolet absorbers may be used alone, or two or more thereof may be used in combination. In view of the ultraviolet

absorption effect, the ultraviolet absorber content is preferably 0.001 to 30 parts by mass, and more preferably 0.05 to 10 parts by mass, relative to 100 parts by mass of the thermoplastic resin.

Examples of the hindered amine-based light stabilizer include: 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malo nate, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/2,4-dichloro-6-morpholino-s-triazin e polycondensate, a 1,6-bis(2,2,6,6-tetramethyl-4-piperidylamino)hexane/2,4-dichloro-6-tert-octylamino-s-tria zine polycondensate, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino)-s-triazin-6-yl]amin oundecane, 1,6,11-tris[2,4-bis(N-butyl-N-(1,2,2,6,6-pentamethyl-4-piperidyl)amino)-s-triazin-6-yl]a minoundecane, bis(2,2,6,6-tetramethyl-1-octyloxy-4-piperidyl)decanedioate, bis(2,2,6,6-tetramethyl-1-undecyloxypiperidin-4-yl)carbonate, TINUVIN NOR 371 manufactured by BASF, and the like. One of these hindered amine-based light stabilizers may be used alone, or two or more thereof may be used in combination. In view of the light stabilization effect, the hindered amine-based light stabilizer content is preferably 0.001 to 30 parts by mass, and more preferably 0.05 to 10 parts by mass, relative to 100 parts by mass of the thermoplastic resin.

The composition of the present invention may further contain, if necessary, additives that are usually used in synthetic resins, such as a cross-linking agent, an antistatic agent, an antifog agent, a plate-out preventing agent, a surface treating agent, a plasticizer, a lubricant, a reinforcement material, a nucleating agent, a flame retardant, a flame-retardant aid, a fluorescent agent, a fungicide, a bactericide, a foaming agent, a metal deactivating agent, a mold release agent, silicone oil, a silane coupling agent, a filler, hydrotalcites, a metallic soap, a pigment, a dye, and the like, as long as the effects of the present invention are not impaired.

There is no particular limitation on the form of the composition of the present invention. In view of the ease of handling of the composition, however, the composition is preferably in the form of pellets, powder, granules, or flakes, and more preferably in the form of pellets.

The composition of the present invention can be used in shaping and other processes, either alone or in combination with compositions that are not a composition of the present invention, additive components, or mixtures thereof. In addition, the composition of the present invention can be used as a master batch.

Shaped Article

A shaped article of the present invention can be obtained by shaping the composition of the present invention using a known method. There is no particular limitation on the shaping method, and examples include shaping methods such as extrusion molding, calendering, injection molding, roll forming, compression molding, and blow molding. Shaped articles having various shapes, such as resin plates, sheets, films, pellets, and profiles, can be produced using such shaping methods.

The composition and the shaped article obtained therefrom, of the present invention can be used in a wide variety of industrial fields, including electric, electronic, and communication fields; agriculture, forestry, and fishery; mining; construction; food; fibers; clothing; medical care; coal; petroleum; rubber; leather; automobiles; precision equipment; wood materials; building materials; civil engineering; furniture; printing; and musical instruments. More specifically, they can be used in applications including: office automation equipment such as printers, personal computers, word processors, keyboards, PDAs (personal digital assistants), telephones, copy machines, facsimile machines, ECRs (electronic cash registers), calculators, electronic organizers, cards, holders, and stationery; consumer electronics such as washing machines, refrigerators, vacuum cleaners, microwave ovens, lighting equipment, game consoles, irons, and *kotatsu* (tables with heaters inside); AV equipment such as TVs, VTRs, video cameras, radio cassette players, tape recorders, MiniDiscs, CD players, speakers, and liquid crystal displays; electric and electronic components such as connectors, relays, capacitors, switches, printed-circuit boards, coil bobbins, semiconductor encapsulation materials, LED encapsulation materials, electric wires, cables, transformers, deflection yokes, distribution boards, and clocks; telecommunication equipment; and the like.

The composition and the shaped article obtained therefrom, of the present invention can also be used in optical material applications, such as optical discs, CD discs, DVD discs, and lenses, as well as in glass substitute applications.

Furthermore, the composition and the shaped article obtained therefrom, of the present invention can be used in the following wide variety of applications: materials for automobiles, vehicles, vessels, aircrafts, buildings, houses, and construction, such as seats (padding, upholstery, etc.), belts, ceiling lining, convertible tops, armrests, door trims, rear

package trays, carpets, mats, sun visors, wheel covers, mattress covers, air bags, insulating materials, grab handles, hanging straps, electric wire coating materials, electrical insulating materials, paints, coating materials, veneer materials, flooring materials, bulkheads, carpets, wallpaper, wall covering materials, exterior materials, interior materials, roofing materials, decking materials, wall materials, pillar materials, floorboards, fence materials, frames and moldings, window and door profiles, shingles, paneling, terraces, balconies, sound insulation plates, heat insulation plates, and window materials; civil engineering materials; household goods and sports goods, such as clothing, curtains, bed sheets, plywood boards, synthetic fiberboards, rugs, entrance mats, sheets, buckets, hoses, containers, eyeglasses, bags, cases, goggles, skis, rackets, tents, and musical instruments; and the like.

Compound

A compound of the present invention is represented by the general formula (1) below.

[Chem. 9]

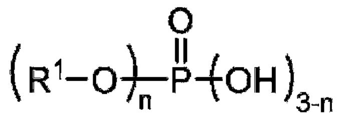

(1)

In the general formula (1), $R^1$ represents an alkyl group having 26 to 40 carbon atoms, an alkenyl group having 26 to 40 carbon atoms, or a group represented by the general formula (2) below, where n represents an integer of 1 or 2. When n is 2, the groups $R^1$ may be the same or different.

[Chem. 10]

$$R^2\left(O-CH_2CH_2\right)_m-* \qquad (2)$$

In the general formula (2), $R^2$ represents hydrogen or an alkyl group having 1 to 18 carbon atoms, m represents an integer that results in a number-average molecular weight of 100 to 10,000 for the group represented by the general formula (2), and * represents a bond.

With the above-described specific structure, the compound of the present invention can exhibit excellent thermal resistance and excellent resin stabilization performance. Note that the description of the compound of the present invention is the same as that in the Additive for Resin section above, and is therefore omitted here.

Others

According to the present invention, the following aspects are conceivable.

[1] An additive for resin, comprising a compound represented by the general formula (1) below:

[Chem. 11]

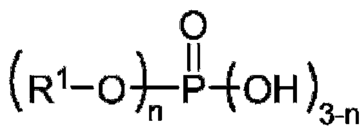

(1)

wherein, in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different:

[Chem. 12]

$$R^2\left(O-CH_2CH_2\right)_m-* \qquad (2)$$

wherein, in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

[2] The additive for resin as set forth in clause [1],
wherein $R^1$ in the general formula (1) represents an alkyl group having 28 to 36 carbon atoms.

[3] The additive for resin as set forth in clause [1],
wherein $R^1$ in the general formula (1) represents a group represented by the general formula (2).

[4] The additive for resin as set forth in clause [3],
wherein $R^2$ in the general formula (2) represents an alkyl group having 1 to 4 carbon atoms.

[5] The additive for resin as set forth in clause [3] or [4],
wherein m in the general formula (2) represents an integer that results in a number-average molecular weight of 400 to 5,000 for the group represented by the general formula (2).

[6] The additive for resin as set forth in any one of clauses [1] to [5], comprising:

an acidic phosphate monoester where n in the general formula (1) is 1; and
an acidic phosphate diester where n in the general formula (1) is 2.

[7] The additive for resin as set forth in clause [6],
wherein a content ratio between the acidic phosphate monoester and the acidic phosphate diester is within a range of 100:1 to 100:10,000 in terms of mass ratio (acidic phosphate monoester:acidic phosphate diester).

[8] A composition comprising a thermoplastic resin and the additive for resin as set forth in any one of clauses [1] to [7].

[9] The composition as set forth in clause [8],
wherein the thermoplastic resin is one or more selected from polyester resins and polycarbonate resins.

[10] A shaped article obtained from the composition as set forth in clause [8] or [9].

[11] A compound represented by the general formula (1) below:

[Chem. 13]

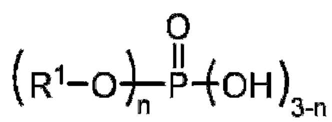

(1)

wherein, in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different:

[Chem. 14]

$$R^2\left(O-CH_2CH_2\right)_m-* \qquad (2)$$

wherein, in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

Examples

Hereinafter, the present invention will be described in further detail based on examples. However, the present invention is not limited to the examples given below.

Production of Additive for Resin

Additives for resin (A)-1 to (A)-6 and a comparative additive for resin (B)-2 were obtained as described in Production Examples 1 to 7 below.

In Production Examples 1 to 7 below, the mass ratio between an acidic phosphate monoester and an acidic phosphate diester was measured using $^{31}$P-NMR. The measurement conditions are shown below. The mass ratio was calculated from the integral ratio between a peak (1.7 ppm to 2.5 ppm) derived from the acidic phosphate monoester and a peak (0.4 ppm to 1.2 ppm) derived from the acidic phosphate diester in the obtained $^{31}$P-NMP spectrum, and the amount of substance of each phosphate.

$^{31}$P-NMR Measurement Conditions

Device: Ascend 400 (manufactured by Bruker Corporation)
Solvent: Deuterochloroform
Number of times of integration: 256

Production Example 1: Additive for Resin (A)-1

First, 449 g of methoxypolyethylene glycol (polyethylene glycol monomethyl ether, number-average molecular weight: 400) and 440 g of ortho-xylene were put into a flask fitted with a stirrer and a condenser. After a nitrogen purge under reduced pressure, the temperature of the mixture was raised to 90°C in an oil bath while stirring. Then, 51 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-1, an acidic phosphate ester of methoxypolyethylene glycol (number-average molecular weight: 400), was obtained. The content ratio between an acidic phosphate monoester and an acidic phosphate diester in the additive for resin (A)-1 was 55:45 in terms of mass ratio.

Production Example 2: Additive for Resin (A)-2

First, 478 g of methoxypolyethylene glycol (number-average molecular weight: 1,000) and 440 g of ortho-xylene were put into a flask fitted with a stirrer and a condenser. After a nitrogen purge under reduced pressure, the temperature of the mixture was raised to 90°C in an oil bath while stirring. Then, 23 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-2, an acidic phosphate ester of methoxypolyethylene glycol (number-average molecular weight: 1,000), was obtained. The content ratio between an acidic phosphate monoester and an acidic phosphate diester in the additive for resin (A)-2 was 57:43 in terms of mass ratio.

Production Example 3: Additive for Resin (A)-3

First, 489 g of methoxypolyethylene glycol (number-average molecular weight: 2,000) and 440 g of ortho-xylene were put into a flask fitted with a stirrer and a condenser. After a nitrogen purge under reduced pressure, the temperature of the mixture was raised to 90°C in an oil bath while stirring. Then, 11 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-3, an acidic phosphate ester of methoxypolyethylene glycol (number-average molecular weight: 2,000), was obtained. The

content ratio between an acidic phosphate monoester and an acidic phosphate diester in the additive for resin (A)-3 was 59:41 in terms of mass ratio.

Production Example 4: Additive for Resin (A)-4

First, 494 g of methoxypolyethylene glycol (number-average molecular weight: 4,000) and 440 g of ortho-xylene were put into a flask fitted with a stirrer and a condenser. After a nitrogen purge under reduced pressure, the temperature of the mixture was raised to 90°C in an oil bath while stirring. Then, 6 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-4, an acidic phosphate ester of methoxypolyethylene glycol (number-average molecular weight: 4,000), was obtained. The content ratio between an acidic phosphate monoester and an acidic phosphate diester in the additive for resin (A)-4 was 63:37 in terms of mass ratio.

Production Example 5: Additive for Resin (A)-5

First, 495 g of methoxypolyethylene glycol (number-average molecular weight: 5,000) and 440 g of ortho-xylene were put into a flask fitted with a stirrer and a condenser. After a nitrogen purge under reduced pressure, the temperature of the mixture was raised to 90°C in an oil bath while stirring. Then, 5 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-5, an acidic phosphate ester of methoxypolyethylene glycol (number-average molecular weight: 5,000), was obtained. The content ratio between an acidic phosphate monoester and an acidic phosphate diester in the additive for resin (A)-5 was 63:37 in terms of mass ratio.

Production Example 6: Additive for Resin (A)-6

First, 455 g of 2-tetradecyloctadecanol and 440 g of ortho-xylene were put into a flask fitted with a stirrer and a condenser. After a nitrogen purge under reduced pressure, the temperature of the mixture was raised to 90°C in an oil bath while stirring. Then, 45 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (A)-6, an acidic phosphate ester of 2-tetradecyloctadecanol, was obtained. The content ratio between an acidic phosphate monoester and an acidic phosphate diester in the additive for resin (A)-6 was 58:42 in terms of mass ratio.

Production Example 7: Comparative Additive for Resin (B)-2

First, 443 g of 2-decyltetradecanol and 440 g of ortho-xylene were put into a flask fitted with a stirrer and a condenser. After a nitrogen purge under reduced pressure, the temperature of the mixture was raised to 90°C in an oil bath while stirring. Then, 57 g of diphosphorus pentoxide was added, the temperature was raised to 110°C, and the reaction was carried out for 4 hours. After completion of the reaction, the solvent was distilled off under reduced pressure, followed by cooling to room temperature. Thus, an additive for resin (B)-2, an acidic phosphate ester of 2-decyltetradecanol, was obtained. The content ratio between an acidic phosphate monoester and an acidic phosphate diester in the additive for resin (B)-2 was 58:42 in terms of mass ratio.

Method for Preparing Composition

Components listed in Tables 2 to 6 were dry-blended, and the mixture was then heated and melt-kneaded at 260°C using a twin-screw extruder (device name: 2D15W, manufactured by Toyo Seiki Seisaku-sho, Ltd.) to obtain compositions in pellet form. Whether fuming or die drool occurred during the processing was recorded. Note that the numerical values indicating the composition in Tables 2 to 6 represent mass ratios.

Details of the components listed in Tables 1 to 6 are as follows:

PC resin: polycarbonate resin (product name: Iupilon S-2000F, manufactured by Mitsubishi Engineering-Plastics Corporation);
PBT resin: polybutylene terephthalate resin (product name: TORAYCON 1200M, manufactured by Toray Industries, Inc.);
PET resin: polyethylene terephthalate resin (product name: TRN-8550FF, manufactured by TEIJIN LIMITED);

Additive for resin (A)-1: the acidic phosphate ester produced in Production Example 1 above;
Additive for resin (A)-2: the acidic phosphate ester produced in Production Example 2 above;
Additive for resin (A)-3: the acidic phosphate ester produced in Production Example 3 above;
Additive for resin (A)-4: the acidic phosphate ester produced in Production Example 4 above;
Additive for resin (A)-5: the acidic phosphate ester produced in Production Example 5 above;
Additive for resin (A)-6: the acidic phosphate ester produced in Production Example 6 above;
Comparative additive for resin (B)-1: a mixture (ADK STAB AX-71, manufactured by ADEKA CORPORATION) of monostearyl acid phosphate and distearyl acid phosphate; and
Comparative additive for resin (B)-2: the acidic phosphate ester produced in Production Example 7 above.

Method for Preparing Test Specimen

The compositions obtained above was shaped using an injection molding machine (device name: NEX80, manufactured by NISSEI PLASTIC INDUSTRIAL CO., LTD.) under the conditions of a cylinder temperature of 260°C and a mold temperature of 80°C to obtain plate-shaped test specimens (60 mm $\times$ 60 mm $\times$ 2 mm).

Method for Evaluating Thermal Resistance

With use of a thermogravimetry/differential thermal analyzer (device name: Thermo plus EVO, manufactured by Rigaku Corporation), the weight loss rate (mass%) when the temperature was raised from 30°C to 400°C under the conditions of a temperature increase rate of 10°C/min in a nitrogen atmosphere was measured, and the temperature (°C) at which the weight loss rate reached -5%, -10%, and -20% were obtained. Table 1 shows the results.

Method for Evaluating Resin Stabilization Performance 1: Coloration

The resin stabilization performance of the additives for resin was evaluated based on coloration of the compositions.
The coloration was evaluated by measuring the yellowness index (YI) of the test specimens obtained above in conformity with JIS K7105 using a spectrophotometer (device name: ColorEye 7000A, manufactured by X-RITE). A higher YI indicates that the composition took on a yellowish tinge, which suggests poorer resin stabilization performance. Tables 2 to 6 show the results.

Method for Evaluating Resin Stabilization Performance 2: Crystallization Temperature

The resin stabilization performance of the additives for resin was evaluated based on the crystallization temperatures of the compositions.
The crystallization temperatures of the compositions obtained above were measured using a differential scanning calorimeter (device name: Diamond DSC, manufactured by PerkinElmer). Samples used were prepared by cutting each composition in pellet form obtained above into small pieces and weighing out 8 $\pm$ 1 mg into an aluminum pan. The crystallization temperature was measured in accordance with the following the procedure.
In a nitrogen atmosphere, the temperature was raised from 30°C to a holding temperature shown below at a rate of 20°C/min, held for 5 minutes, and then cooled to 30°C at a rate of -20°C/min. This was considered as the first cycle, and the crystallization temperature ($Tc_1$) of the first cycle was determined from the temperature of the exothermic peak observed during the cooling process. After that, the temperature was raised from 30°C to the holding temperature shown below at a rate of 20°C/min, held for 30 minutes, and then cooled to 30°C at a rate of -20°C/min. This was considered as the second cycle, and the crystallization temperature ($Tc_2$) of the second cycle was determined from the temperature of the exothermic peak observed during the cooling process. Note that the holding temperature in the above-described crystallization temperature measurement was as follows:

Alloys of PC resin and PBT resin (Examples and Comparative Examples shown in Tables 2 to 5): holding temperature 260°C; and
Alloys of PC resin and PET resin (Examples and Comparative Examples shown in Table 6): holding temperature 280°C.

Subsequently, the difference $\Delta Tc$ between $Tc_1$ and $Tc_2$ was obtained in accordance with the following equation (ii):

$$\Delta Tc = Tc_1 - Tc_2 \qquad (ii).$$

When no additive for resin was added, or when an additive for resin without sufficient resin stabilization performance was added, $Tc_2$ decreased significantly relative to $Tc_1$, resulting in a greater $\Delta Tc$. This is thought to be because catalyst residue in the resins causes a decrease in molecular weight of the resins and hybridization of molecular bonds due to a transesterification reaction, thereby lowering the crystallization temperature of the second cycle. On the other hand, when an additive for resin with sufficient resin stabilization performance was added, the degree of decrease in $Tc_2$ relative to $Tc_1$ was low, resulting in a $\Delta Tc$ closer to 0. Tables 2 to 6 show the results.

[Table 1]

| | Additive for resin (A)-1 | Additive for resin (A)-2 | Additive for resin (A)-3 | Additive for resin (A)-4 | Additive for resin (A)-5 | Additive for resin (A)-6 | Comparative additive for resin (B)-1 | Comparative additive for resin (B)-2 |
|---|---|---|---|---|---|---|---|---|
| Temperature when weight loss rate was -5 mass% | 250 | 287 | 301 | 334 | 350 | 268 | 226 | 240 |
| Temperature when weight loss rate was -10 mass% | 266 | 308 | 323 | 355 | 367 | 287 | 243 | 249 |
| Temperature when weight loss rate was -20 mass% | 284 | 332 | 350 | 370 | 380 | 307 | 251 | 260 |

[Table 2]

| | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Ex. 2-10 | Ex. 2-11 | Ex. 2-12 |
|---|---|---|---|---|---|---|---|---|---|---|---|---|
| PC resin | 34.93 | 34.93 | 33.95 | 34.9965 | 34.993 | 34.9825 | 34.965 | 34.930 | 34.895 | 34.65 | 33.95 | 33.25 |
| PBT resin | 64.87 | 64.87 | 63.05 | 64.9935 | 64.987 | 64.9675 | 64.935 | 64.870 | 64.805 | 64.35 | 63.05 | 61.75 |
| PET resin | - | - | - | - | - | - | - | - | - | - | - | - |
| Additive for resin (A)-1 | 0.2 | - | - | - | - | - | - | - | - | - | - | - |
| Additive for resin (A)-2 | - | 0.2 | 3 | - | - | - | - | - | - | - | - | - |
| Additive for resin (A)-3 | - | - | - | 0.01 | 0.02 | 0.05 | 0.1 | 0.2 | 0.3 | 1 | 3 | 5 |
| Additive for resin (A)-4 | - | - | - | - | - | - | - | - | - | - | - | - |
| Additive for resin (A)-5 | - | - | - | - | - | - | - | - | - | - | - | - |
| Additive for resin (A)-6 | - | - | - | - | - | - | - | - | - | - | - | - |
| Comparative additive for resin (B)-1 | - | - | - | - | - | - | - | - | - | - | - | - |
| Comparative additive for resin (B)-2 | - | - | - | - | - | - | - | - | - | - | - | - |
| Fuming and die drool during processing | No | No | No | No | No | No | No | No | No | No | No | No |
| YI | 3 | 2 | 2 | 10 | 8 | 6 | 5 | 1 | 1 | 2 | 2 | 2 |
| ΔTc | 0 | 0 | 0 | 7 | 1 | 1 | 0 | 0 | 0 | 0 | 1 | 1 |

| | Ex. 2-13 | Ex. 2-14 | Ex. 2-15 | Ex. 2-16 | Ex. 2-17 | Ex. 2-18 | Ex. 2-19 | Com. Ex. 2-1 | Com. Ex. 2-2 | Com. Ex. 2-3 | Com. Ex. 2-4 |
|---|---|---|---|---|---|---|---|---|---|---|---|
| PC resin | 34.93 | 33.95 | 34.93 | 34.993 | 34.97 | 34.65 | 33.95 | 35 | 34.9825 | 34.93 | 34.93 |
| PBT resin | 64.87 | 63.05 | 64.87 | 64.987 | 64.94 | 64.35 | 63.05 | 65 | 64.9675 | 64.87 | 64.87 |
| PET resin | - | - | - | - | - | - | - | - | - | - | - |
| Additive for resin (A)-1 | - | - | - | - | - | - | - | - | - | - | - |
| Additive for resin (A)-2 | - | - | - | - | - | - | - | - | - | - | - |
| Additive for resin (A)-3 | - | - | - | - | - | - | - | - | - | - | - |
| Additive for resin (A)-4 | 0.2 | 3 | - | - | - | - | - | - | - | - | - |
| Additive for resin (A)-5 | - | - | 0.2 | - | - | - | - | - | - | - | - |
| Additive for resin (A)-6 | - | - | - | 0.02 | 0.1 | 1 | 3 | - | - | - | - |
| Comparative additive for resin (B)-1 | - | - | - | - | - | - | - | - | 0.05 | 0.2 | - |
| Comparative additive for resin (B)-2 | - | - | - | - | - | - | - | - | - | - | 0.2 |
| Fuming and die drool during processing | No | No | No | No | No | No | No | No | Yes | Yes | Yes |
| YI | 6 | 2 | 9 | 4 | 1 | 1 | 2 | 15 | 7 | 4 | 2 |
| ΔTc | 0 | 0 | 3 | 0 | 0 | 0 | 0 | 8 | 1 | -2 | 2 |

[Table 3]

| | Ex. 3-1 | Com. Ex. 3-1 | Com. Ex. 3-2 |
|---|---|---|---|
| PC resin | 49.9 | 50 | 49.9 |
| PBT resin | 49.9 | 50 | 49.9 |
| PET resin | - | - | - |
| Additive for resin (A)-3 | 0.2 | - | - |
| Comparative additive for resin (B)-1 | - | - | 0.2 |
| Fuming and die drool during processing | No | No | Yes |
| YI | 2 | 20 | 4 |
| ΔTc | 2 | 9 | 4 |

[Table 4]

| | Ex. 4-1 | Com. Ex. 4-1 | Com. Ex. 4-2 |
|---|---|---|---|
| PC resin | 64.87 | 65 | 64.87 |
| PBT resin | 34.93 | 35 | 34.93 |
| PET resin | - | - | - |
| Additive for resin (A)-3 | 0.2 | - | - |
| Comparative additive for resin (B)-1 | - | - | 0.2 |
| Fuming and die drool during processing | No | No | Yes |
| YI | 8 | 37 | 35 |
| ΔTc | 5 | 20 | 8 |

[Table 5]

| | Ex. 5-1 | Com. Ex. 5-1 | Com. Ex. 5-2 |
|---|---|---|---|
| PC resin | 89.82 | 90 | 89.82 |
| PBT resin | 9.98 | 10 | 9.98 |
| PET resin | - | - | - |
| Additive for resin (A)-3 | 0.2 | - | - |
| Comparative additive for resin (B)-1 | - | - | 0.2 |
| Fuming and die drool during processing | No | No | Yes |
| YI | 6 | 14 | 10 |
| ΔTc | 6 | 12 | 8 |

[Table 6]

| | Ex. 6-1 | Ex. 6-2 | Com. Ex. 6-1 | Com. Ex. 6-2 |
|---|---|---|---|---|
| PC resin | 49.9 | 49.9 | 50 | 49.9 |
| PBT resin | - | - | - | - |
| PET resin | 49.9 | 49.9 | 50 | 49.9 |
| Additive for resin (A)-3 | 0.2 | - | - | - |
| Additive for resin (A)-6 | - | 0.2 | - | - |
| Comparative additive for resin (B)-1 | - | - | - | 0.2 |
| Fuming and die drool during processing | No | No | No | Yes |

(continued)

| | Ex. 6-1 | Ex. 6-2 | Com. Ex. 6-1 | Com. Ex. 6-2 |
|---|---|---|---|---|
| YI | 1 | 1 | 12 | 4 |
| ΔTc | 2 | 3 | 8 | 4 |

It can be seen from Table 1 that the additives for resin (A)-1 to (A)-6 exhibited high weight loss temperatures, demonstrating that these additives for resin had excellent thermal resistance. On the other hand, the comparative additives for resin (B)-1 and (B)-2 exhibited lower weight loss temperatures than the additives for resin (A)-1 to (A)-6, demonstrating that they had inferior thermal resistance.

Table 2 shows the evaluation results of compositions (Examples 2-1 to 2-19) obtained by adding the additives for resin (A)-1 to (A)-6 of the present invention to alloys of the PC resin and the PBT resin (PC resin:PBT resin = 35:65 in terms of mass ratio), and compositions (Comparative Examples 2-1 to 2-4) in which no additive for resin of the present invention was added. The compositions of Examples 2-1 to 2-19 did not cause any processing problems such as fuming and die drool during processing. On the other hand, the compositions of Comparative Examples 2-2 to 2-4 caused processing problems such as fuming and die drool during processing. From this, it was found that the additives for resin of the present invention had excellent thermal resistance. Furthermore, comparisons of Examples 2-1 to 2-19 with Comparative Example 2-1 showed that the values of YI and ΔTc were reduced by adding the additives for resin of the present invention to the thermoplastic resins, and the effect of the additives for resin was sufficiently achieved.

Tables 3 to 5 showed the evaluation results of compositions in which alloys of the PC resin and the PBT resin with different content ratios from the content ratio of the compositions in Table 2 were used. Table 6 shows the evaluation results of compositions in which alloys of the PC resin and the PET resin were used. The compositions in which the additives for resin of the present invention were added did not cause any processing problems such as fuming and die drool during processing. On the other hand, the compositions in which the comparative additive for resin was added caused processing problems such as fuming and die drool during processing. In addition, the values of YI and ΔTc of the compositions in which the additives for resin of the present invention were added were smaller than those of the compositions in which no additive for resin of the present invention was added.

The foregoing results indicated that an additive for resin of the present invention has excellent thermal resistance and excellent resin stabilization performance.

## Claims

**1.** An additive for resin, comprising a compound represented by the general formula (1) below:

[Chem. 1]

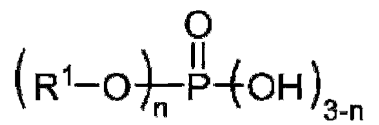

(1)

wherein, in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different:

[Chem. 2]

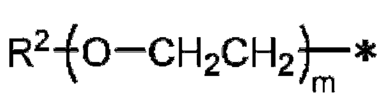

(2)

wherein, in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

**2.** The additive for resin according to claim 1, wherein $R^1$ in the general formula (1) represents alkyl group having 28 to 36 carbon atoms.

**3.** The additive for resin according to claim 1, wherein $R^1$ in the general formula (1) represents a group represented by the general formula (2).

**4.** The additive for resin according to claim 3, wherein $R^2$ in the general formula (2) represents an alkyl group having 1 to 4 carbon atoms.

**5.** The additive for resin according to claim 3, wherein m in the general formula (2) represents an integer that results in a number-average molecular weight of 400 to 5,000 for the group represented by the general formula (2).

**6.** The additive for resin according to claim 1, comprising:

an acidic phosphate monoester where n in the general formula (1) is 1; and
an acidic phosphate diester where n in the general formula (1) is 2.

**7.** The additive for resin according to claim 6, wherein a content ratio between the acidic phosphate monoester and the acidic phosphate diester is within a range of 100:1 to 100:10,000 in terms of mass ratio (acidic phosphate monoester:acidic phosphate diester).

**8.** A composition comprising a thermoplastic resin and the additive for resin according to any one of claims 1 to 7.

**9.** The composition according to claim 8, wherein the thermoplastic resin is one or more selected from polyester resins and polycarbonate resins.

**10.** A shaped article obtained from the composition according to claim 8.

**11.** A compound represented by the general formula (1) below:

[Chem. 3]

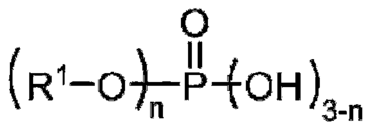

(1)

wherein, in the general formula (1), $R^1$ represents an alkyl group having 26 to 40 carbon atoms, an alkenyl group having 26 to 40 carbon atoms, or a group represented by the general formula (2) below, and
n represents an integer of 1 or 2, and when n is 2, the groups $R^1$ may be the same or different:

[Chem. 4]

$$R^2\left(O-CH_2CH_2\right)_m * \qquad (2)$$

wherein, in the general formula (2), $R^2$ represents hydrogen or an alkyl group having 1 to 18 carbon atoms,
m represents an integer that results in a number-average molecular weight of 100 to 10,000 for the group represented by the general formula (2), and
* represents a bond.

## INTERNATIONAL SEARCH REPORT

International application No.
**PCT/JP2024/006823**

**A. CLASSIFICATION OF SUBJECT MATTER**

***C08L 101/00***(2006.01)i; ***C07F 9/09***(2006.01)i; ***C08K 5/521***(2006.01)i
FI: C08L101/00; C08K5/521; C07F9/09 Z; C07F9/09 K

According to International Patent Classification (IPC) or to both national classification and IPC

**B. FIELDS SEARCHED**

Minimum documentation searched (classification system followed by classification symbols)

C08L101/00; C07F9/09; C08K5/521

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2023-26250 A (ADEKA CORPORATION) 24 February 2023 (2023-02-24) paragraph [0089], (A)-3, (B)-3, table 1, E7, paragraphs [0091], [0092], table 3, example 13 | 1, 2, 6-11 |
| A | | 3-5 |
| X | JP 6-279641 A (SANKYO YUKI GOSEI KK) 04 October 1994 (1994-10-04) paragraphs [0024], [0033], [0036], no. 21, 22, paragraph [0047], C-7, C-8, paragraph [0054], table 1, sample no. 11, table 2, sample no. 18, 21 | 1-8, 10, 11 |
| A | | 9 |
| X | JP 2019-151622 A (SKC CO., LTD.) 12 September 2019 (2019-09-12) paragraphs [0073], [0074], [0077], [0078], table 1, example 5 | 1-4, 6, 7, 11 |
| A | | 5, 8-10 |
| X | JP 2008-69093 A (FUJIFILM CORPORATION) 27 March 2008 (2008-03-27) paragraph [0041] | 11 |
| A | | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/006823**

| Patent document cited in search report | Publication date (day/month/year) | Patent family member(s) | Publication date (day/month/year) |
|---|---|---|---|
| JP 2023-26250 A | 24 February 2023 | (Family: none) | |
| JP 6-279641 A | 04 October 1994 | (Family: none) | |
| JP 2019-151622 A | 12 September 2019 | US 2019/0263846 A1<br>paragraphs [0074], [0075], [0078]-[0081], table 1, example 5<br>EP 3530684 A1<br>CN 110183603 A<br>KR 10-1910131 B1 | |
| JP 2008-69093 A | 27 March 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009144132 A
- JP 2020033462 A